# EUROPEAN PATENT SPECIFICATION

(11) **EP 4 465 165 B1**
(45) Date of publication and mention of the grant of the patent: **19.11.2025**
(21) Application number: 24174836.7
(22) Date of filing: 08.05.2024
(51) Int. Cl.: G06F 3/12

(54) **INFORMATION PROCESSING APPARATUS, METHOD OF INSTALLING CLOUD PRINTER DRIVER, AND PROGRAM**
INFORMATIONSVERARBEITUNGSVORRICHTUNG, VERFAHREN ZUR INSTALLATION EINES CLOUD-DRUCKERTREIBERS UND PROGRAMM
APPAREIL DE TRAITEMENT D'INFORMATIONS, PROCÉDÉ D'INSTALLATION DE PILOTE D'IMPRIMANTE EN NUAGE ET PROGRAMME

(30) Priority: 15.05.2023 JP 2023080369
(43) Date of publication of application: 20.11.2024
(73) Proprietor: CANON KABUSHIKI KAISHA, Tokyo 146-8501 (JP)
(72) Inventor: OIKAWA, Ryo, Tokyo, 146-8501 (JP)
(74) Representative: Canon Europe Limited

(56) References cited:
- US-A1- 2006 072 140
- US-A1- 2021 240 412
- US-A1- 2023 008 087
- US-B2- 8 451 463

## Description

### BACKGROUND OF THE INVENTION

### Field of the Invention

The present invention relates to an information processing apparatus, a method of installing a cloud printer driver, and a program for a computer.

### Description of the Related Art

In recent years, printing that uses a cloud printing service has been devised. In the cloud printing service, a printer driver for the cloud printing service (a cloud printer driver) is installed on an information processing apparatus. According to the cloud printing service, the information processing apparatus generates a print job with use of the cloud printer driver and transmits the print job to the cloud printing service, and the cloud printing service transmits the print job to an image forming apparatus; as a result, printing is executed.

Also, in recent years, there is also a cloud printing service that aims to provide print management functions, unlike the aforementioned cloud printing service that aims to provide the function of transmitting a print job to a printer. The print management functions provide a variety of printing-related functions for aggregating reports on printing results, forcing every user in an organization to use the print settings configured by an administrator, and the like. In such a service, first, an administrator registers an image forming apparatus with a tenant of a cloud printing service to which the administrator belongs. The administrator sets which one of the users who belong to the tenant is permitted to use the image forming apparatus. Here, a tenant refers to one service system developed on a cloud, and includes an access-limited storage area that is dedicated to a specific user(s). That is to say, from a viewpoint of a user, the cloud printing service allows the use of a service provided in a tenant to which the user belongs; thus, the cloud printing service may be referred to as a tenant from the user's point of view.

For example, in a cloud printing service used by a certain company A, employees of the company A are registered as users with a tenant of the company A in the cloud printing service, and image forming apparatuses of the company A are registered therewith; in this way, the service is used. As a result, when the registered users of the company A have executed printing from an in-house terminal, the printing can be freely performed on any registered image forming apparatus owned by the company A.

Printing that uses such a cloud printing service may provide functions by communicating with a tenant during the execution of the printing. In this case, the functions may be provided by a client application that operates in coordination with a cloud printer driver. One example is a function of selecting a cost bearer. A cost bearer refers to an organization or a person who bears the cost incurred. When printing is performed, a client application installed on a client terminal obtains "a list of cost bearers" that has been set in a tenant in advance. A budget management function is provided by the client application causing a user to make a selection from the list of cost bearers based on the obtained information. This enables management in which a budget is allocated to a project or a department for each session of printing. Such a function is realized by a printer driver provided by a vendor or an application that functions in association with the printer driver.

A characteristic of such a cloud printer driver is that a printer driver is not placed in correspondence with a specific image forming apparatus, and a print job can be output from any device as long as the device is an image forming apparatus that is in correspondence with a tenant of a cloud printing service. Meanwhile, there are cases where, as the printer driver is not in correspondence with a specific device, a function that has been realized by performing communication directly with a device becomes unusable. One example of such a function is obtainment of device configuration information. Device configuration information includes information indicating which one of the options that are connected to an image forming apparatus for performing punching, stapling, and the like has been mounted. In order to configure print settings related to such option equipment on a printer driver, the printer driver needs to obtain configuration information of devices.

In the case of a normal printer driver, the printer driver and an output destination device are in one-to-one correspondence; thus, configuration information can easily be obtained when, for example, the printer driver is installed for the first time. However, in the case of a cloud printer driver, due to its nature where a driver is not in one-to-one correspondence with a device, configuration information of devices cannot be obtained. For this reason, in order to designate print settings that use option equipment, a user needs to manually set which option equipment is connected.

This problem becomes prominent especially when a user in an environment where they use a normal printer driver that is in one-to-one correspondence with a device transitions to an environment where they use a cloud printing service. A driver module used in a cloud printer driver is often similar to a normal driver that is in one-to-one correspondence with a device. Therefore, when the user has transitioned to the environment of the cloud printing service, a situation arises where, although the appearance of the driver is the same, the print settings that were previously usable become unusable unless the user takes the trouble of manually configuring the settings of option equipment.

According to Japanese Patent Laid-Open publication No. 2010-186324, the setting values of default print settings of a printer driver are stored in such a manner that they are saved in a Private area of the DevMode structure, and the settings are carried over by referring to the setting values when a driver is newly installed.

However, the method described in Japanese Patent Laid-Open publication No. 2010-186324 does not handle device configuration information that includes information of option equipment for a device, and thus does not allow configuration information to be carried over from a normal printer driver that was previously used in a configuration that uses a cloud printer driver.

US 2023/0008087 A1 discloses information processing apparatus, method for controlling the same, and storage medium. The information processing apparatus n which a first printer driver configured to generate first print data to be transmitted to an image forming apparatus according to a predetermined protocol and a second printer driver configured to generate second print data to be transmitted to a server system according to the predetermined protocol are installed, the information processing apparatus comprising: a display unit configured to display a first screen in a case where first information for transmitting the first print data to the image forming apparatus is selected, and to display a second screen in a case where second information for transmitting the second print data to the image forming apparatus via the server system is selected; a first transmission unit configured to transmit, to the image forming apparatus, the first print data based on a setting accepted via the displayed first screen; and a second transmission unit configured to transmit, to the server system, the second print data based on a setting accepted via the displayed second screen.

US 2006/0072140 A1 discloses system and method for configuring printer driver settings. A method for configuring printer driver settings of printer drivers stored on a computer, the printer drivers enabling communication between the computer and a hardcopy device capable of printing, the method comprising: changing a setting of a first printer driver stored on the computer in response to a user request; detecting whether a second printer driver stored on the computer is identified in connection with a same port as the first printer driver; and changing at least one setting of the second printer driver to match the changed setting of the first printer driver if the second printer driver is identified in connection with the same port as the first printer driver.

When a user who uses a normal printer driver, which is in one-to-one correspondence with a device, is to transition to an environment that uses a cloud printing service, the user installs a cloud printer driver and a client application on a client terminal. At this time, the cloud printer driver is not in correspondence with a device; therefore, even if option equipment such as a puncher and a stapler is connected to an image forming apparatus to be used, device configuration information thereof cannot be automatically obtained. This gives rise to the problem that, even if the user uses printer drivers that have similar driver modules before and after the environmental transition, the user, after the transition, cannot use print settings that are similar to print settings before the environmental transition unless the user manually changes the settings of a device configuration.

### SUMMARY OF THE INVENTION

The invention of the present application improves productivity by alleviating the effort required for a user to use print settings, which is attributed to the inability to obtain device configuration information at the time of installation of a cloud printer driver.

The present invention has the following configuration. The present invention in its first aspect provides an information processing apparatus as specified in claim 1. Preferable features are specified in claims 2 to 6.

The present invention in its second aspect provides a computer program as specified in claim 13.

The present invention in its third aspect provides a method of installing a cloud printer driver as specified in claim 7. Preferable features of the second aspect may be specified or derivable from claims 8 to 12.

According to the present invention, productivity can be improved by alleviating the effort required for a user to use print settings, which is attributed to the inability to obtain device configuration information at the time of installation of a cloud printer driver.

Further features of the present invention will become apparent from the following description of embodiments with reference to the attached drawings.

### BRIEF DESCRIPTION OF THE DRAWINGS

FIG. 1 is a diagram of an overall configuration of a system.
FIG. 2 is a block diagram showing an hardware configuration of a Cloud Print Service (CPS).
FIG. 3 is a block diagram showing a hardware configuration of a client terminal and an image forming apparatus.
FIG. 4 is a block diagram showing a software configuration of a client application.
FIG. 5 is a block diagram showing a software configuration of the CPS.
FIG. 6 is a flowchart for obtaining configuration information from an installed printer according to a first embodiment.
FIG. 7 is a diagram showing an example of a screen displayed by the client application according to the first embodiment.
FIG. 8 is a flowchart for obtaining configuration information from an installed printer according to a second embodiment.
FIG. 9 is a diagram showing an example of a screen displayed by the client application according to the second embodiment.

### DESCRIPTION OF THE EMBODIMENTS

Hereinafter, embodiments will be described in detail with reference to the attached drawings. Note, the following embodiments are not intended to limit the scope of the claimed invention but provide examples of how it may be carried into effect. Multiple features are described in each of the embodiments, but limitation is not made to an invention that requires all such features, and multiple such features may be combined from different embodiments as appropriate. Put another way, each embodiment described and shown can be implemented solely or as a combination of a plurality of the elements or features thereof where necessary or where the elements or features from individual embodiments in a single embodiment is beneficial. Furthermore, in the attached drawings, the same reference numerals are given to the same or similar configurations, and redundant description thereof is omitted.

### [First Embodiment]

A first embodiment of an unclaimed aspects of the present invention will be described. The first embodiment will be described using an example in which configuration information of a printer driver that has the same driver module as a cloud printer driver already installed on a client terminal is applied as configuration information of the installed cloud printer driver. Note that a provider of a service like a cloud printing service is an information processing apparatus called a server; however, hereinafter, the service and the server will not be particularly distinguished from each other, and the server that provides the service is comprehensively referred to as the service. Furthermore, a printer driver for an image forming apparatus that is connected to an information processing apparatus without intervention of a server of a cloud printing service or the like may be referred to as a local printer driver for the sake of distinction from a cloud printer driver.

Upon receiving a print instruction for document data from an application, a local printer driver generates print data that can be interpreted and executed by an image forming apparatus from the document data of the print instruction. Then, the local printer driver obtains a connection destination corresponding to the image forming apparatus, such as an IP address, and issues a print instruction by transmitting the print data to a port monitor. On the other hand, upon receiving a print instruction for document data from an application, a cloud printer driver converts the document data of the print instruction into print data of a format provided by a cloud printing service. Alternatively, in the case of document data of a format that does not require conversion, the format may not be converted. Then, the cloud printer driver obtains a connection destination of the cloud printing service, such as a URL, and transmits the print data to a cloud port monitor. A driver module is a program for achieving the functions of a printer driver.

Note that when print data is transmitted to an image forming apparatus or a cloud printing service, print settings for executing printing thereof are also transmitted together. They are collectively referred to as a print job. That is to say, a cloud printer driver and a local printer driver generate a print job, and the generated print job is transmitted to a cloud printing service or an image forming apparatus.

### • System Configuration

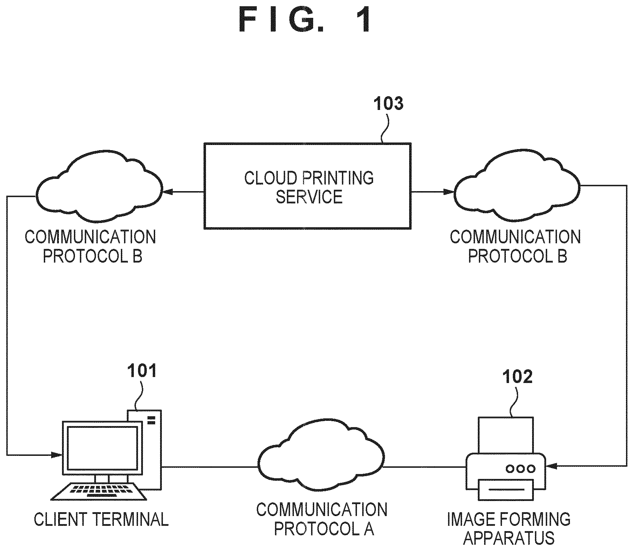

FIG. 1 is a diagram of an overall configuration of a system according to the present embodiment. A cloud printing service (hereinafter, CPS) 103 receives a print job from a client terminal 101, and stores the same. Also, upon receiving a print job request from an image forming apparatus 102, the CPS 103 transmits a print job to the image forming apparatus 102. The image forming apparatus 102 executes printing upon receiving the print job from the CPS 103. A communication protocol A is a protocol for performing communication between the client terminal 101 and the image forming apparatus 102. A communication protocol B is a protocol for performing network communication between the client terminal 101 and the CPS 103, and between the image forming apparatus 102 and the CPS 103. In the present embodiment, these communication protocols represent protocols in an upper layer (application layer); protocols of a similar type (e.g., TCP/IP) may be used in a lower layer. A communication medium may be, for example, a LAN, a wireless network, a wide-area network, or the like.

In the configuration of FIG. 1, a local printer driver is used when the client terminal 101 performs printing on the image forming apparatus 102 via the communication protocol A. Meanwhile, a cloud printer driver is used when the client terminal 101 performs printing on the image forming apparatus 102 via the communication protocol B by way of the cloud printing service 103. In the present embodiment, a configuration change is made from a system configuration in which the client terminal 101 performs printing on the image forming apparatus 102 using the local printer driver, to a system configuration in which printing is performed by way of the CPS 103. Therefore, although the configuration of FIG. 1 is transiently adopted, the connection between the client terminal 101 and the image forming apparatus 102 via the communication protocol A may be cancelled after the configuration change.

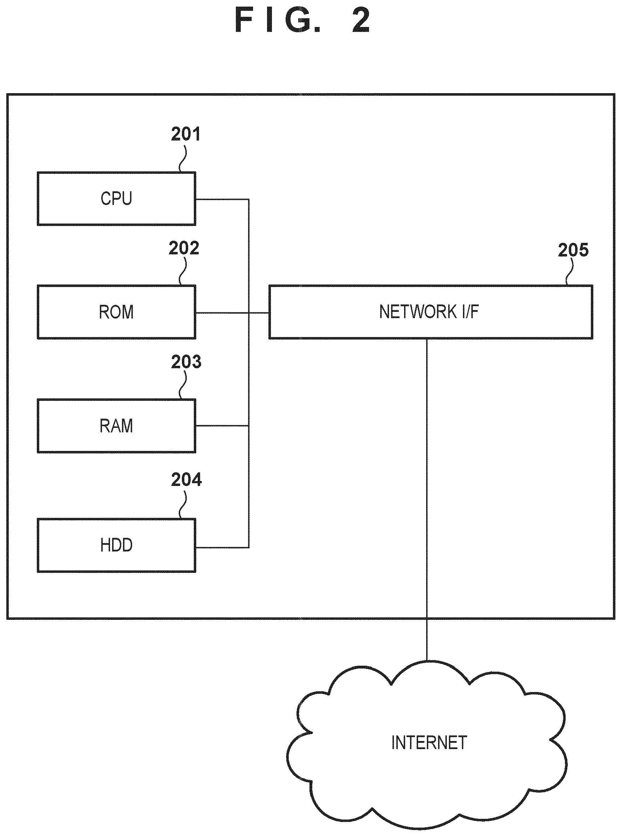

FIG. 2 is a block diagram showing a hardware configuration of an information processing apparatus that is used as the CPS 103 shown in FIG. 1. Furthermore, a similar hardware configuration of a general information processing apparatus is applicable also to the client terminal and the image forming apparatus of the present embodiment.

A CPU 201 reads out and executes a control program stored in a ROM 202, thereby executing various types of processing and controlling the overall operations. A RAM 203 is used as a main memory and a temporary storage area, such as a working area, for the CPU 201. An HDD 204 is a large-capacity storage unit that stores image data and various types of programs. A network I/F 205 is an interface for connecting the CPS 103 to the Internet. Via the network I/F 205, the CPS 103 receives processing requests from the client terminal, the image forming apparatus, and another CPS 103, executes various types of processing, and transmits and receives information.

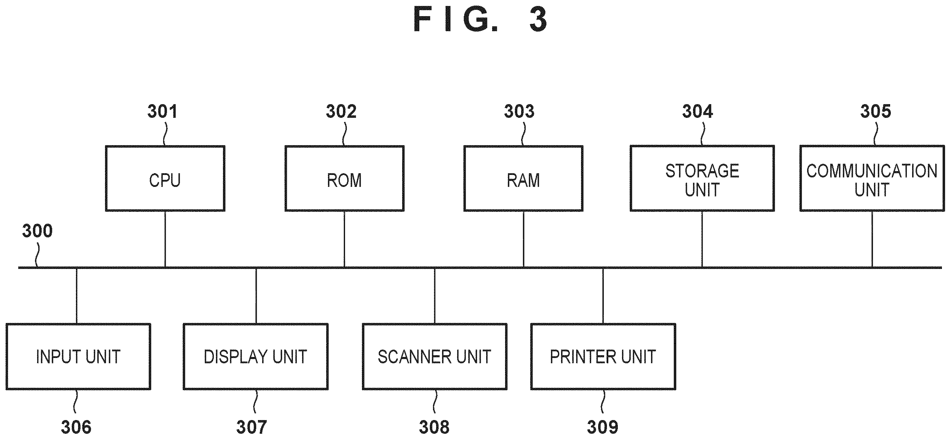

FIG. 3 is a block diagram showing a hardware configuration of the client terminal 101 and the image forming apparatus 102 shown in FIG. 1. A hardware configuration of a general client terminal is applicable to the client terminal 101 and the image forming apparatus 102 of the present embodiment. Note that the client terminal does not include a scanner unit and a printer unit.

A CPU 301 executes, for example, discrete functions such as printing and scanning by integrally controlling the entirety of each item of hardware and controlling each unit connected to a bus 300 by executing a program.

A ROM 302 is a memory dedicated to reading of data, and stores, for example, a basic control program of the image forming apparatus.

A RAM 303 is a memory that allows data to be read therefrom and written thereto, and is used as, for example, a working memory for the CPU 301.

A storage unit 304 is used as a storage area for temporary data that is currently causing each program to be executed, and permanent data. For example, although an HDD is often used as the storage unit 304, an apparatus that allows reading and writing of data by loading an external medium such as an SSD, a CD, a DVD, and a memory card may be used thereas.

A communication unit 305 connects the client terminal 101, the image forming apparatus 102, and the CPS 103 to a LAN or the Internet, and enables data communication among the apparatuses via TCP/IP.

An input unit 306 is an operation unit for accepting a user operation to input characters and data. It is a keyboard, a mouse, a hardware key, a touch panel, or the like.

A display unit 307 is an apparatus for displaying various types of screens, and is a liquid crystal display, a touch panel, or the like. A user issues a job execution instruction by issuing an instruction via the input unit 306 on a user interface screen displayed on the display unit 307.

In addition, a scanner unit 308 and a printer unit 309 are connected to the bus 300 in the image forming apparatus 102.

### • Client Application

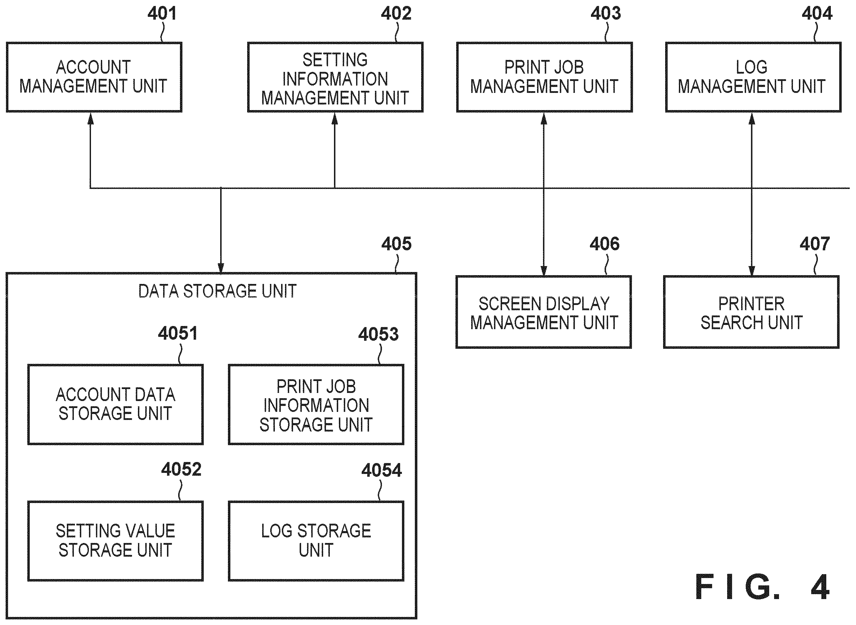

FIG. 4 is a block diagram showing an software configuration of a client application installed on the client terminal 101 according to the present embodiment. The software configuration illustrated in FIG. 4 is realized by the CPU 301 loading a program stored in, for example, the ROM 302 or the storage unit 304 to the RAM 303 and executing the program.

An account management unit 401 manages a login state of an account of the CPS 103. Information of a registered account is stored in an account data storage unit 4051 of a data storage unit 405.

A setting information management unit 402 manages obtainment and updating of setting values that have been set in the CPS 103. Information managed by the setting information management unit 402 is stored in a setting value storage unit 4052 of the data storage unit 405.

A print job management unit 403 transmits and receives a print job. When a print job is transmitted or received in accordance with the settings stored in the setting value storage unit 4052, bibliographic information including, for example, the number of pages and the print settings of the print job is stored into a print job information storage unit 4053, or transmitted to a tenant of the CPS 103 and the image forming apparatus.

A log management unit 404 generates a log of communication and processing performed by the client application, and stores the log into a log storage unit 4054. Furthermore, an operation log can also be stored into an external storage via a user operation.

The data storage unit 405 stores account information, device information, and the like using discrete storage apparatuses such as the RAM 303 and the storage unit 304 of the CPS 103. The data storage unit 405 includes the account data storage unit 4051, the setting value storage unit 4052, the print job information storage unit 4053, and the log storage unit 4054. The account data storage unit 4051 stores information related to an account. Account information denotes information of a user who has been registered with the CPS 103; for example, information that identifies the user, a department to which the user belongs, and an account authority that have been obtained from the CPS 103 are also included in this account information. The setting value storage unit 4052 stores setting values of printing-related functions and the like that have been set in the CPS 103, in addition to a tenant URL of the CPS 103. The setting values include setting values that determine whether to store bibliographic information of a print job in the client application, whether functions and services have been enabled, and so forth in processing of the print job management unit 403. The print job information storage unit 4053 stores bibliographic information of a print job to be printed in the CPS 103. The log storage unit 4054 stores a log at the time of execution of the client application.

A screen display management unit 406 controls a screen that is displayed for the user for operation of the client application.

A printer search unit 407 searches for an image forming apparatus connected to the client terminal 101.

### • Software of CPS

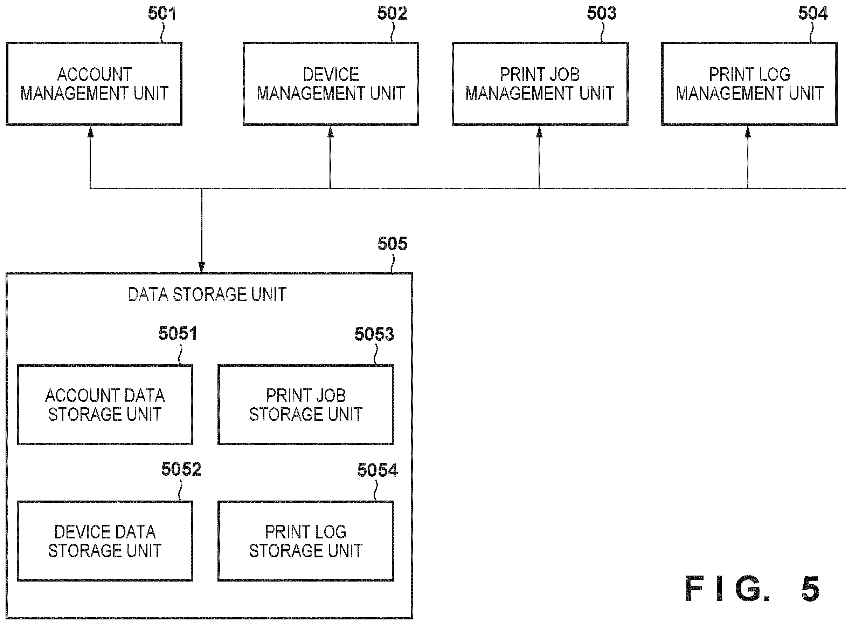

FIG. 5 is a block diagram showing a software configuration of the CPS 103 according to the first embodiment. The software configuration illustrated in FIG. 5 is realized by the CPU 201 loading a program stored in, for example, the ROM 202 or the HDD 204 to the RAM 203 and executing the program.

An account management unit 501 registers and deletes an account, and further manages a login state of the account. Information of a registered account is stored in an account data storage unit 5051 of a data storage unit 505.

A device management unit 502 registers and deletes a device, and further manages a usage state of the device. Information of a registered device is stored in a device data storage unit 5052 of the data storage unit 505.

A print job management unit 503 receives or transmits a print job. A received print job is stored in a print job storage unit 5053 of the data storage unit 505, and transmitted to a designated device in accordance with a request from the image forming apparatus 102.

A print log management unit 504 obtains a print log from the image forming apparatus 102. The obtained print log is stored in a print log storage unit 5054 of the data storage unit 505. A print log denotes the contents that have been set and output by a user, such as a size of a sheet that has been printed, which one of color printing and monochrome printing has been performed, which one of double-sided printing and single-sided printing has been performed, and the like.

The data storage unit 505 stores account information, device information, and the like using discrete storage apparatuses such as the RAM 203 and the HDD 204 of the CPS 103. The data storage unit 505 is composed of the account data storage unit 5051, the device data storage unit 5052, the print job storage unit 5053, and the print log storage unit 5054. The account data storage unit 5051 stores information related to an account. Account information denotes information of a user who has been registered with the CPS 103; for example, information that identifies the user, a department to which the user belongs, and an account authority are also included in this account information. The device data storage unit 5052 contains information of a device that has been registered with the CPS 103; for example, a model name of the device, information that identifies the device, and position information of the device are included therein. The print job storage unit 5053 stores a print job stored in the CPS 103, and bibliographic information of the print job. The print log storage unit 5054 stores a printing result obtained from a device that has output a print job.

### • Installation of Client Application and Cloud Printer Driver

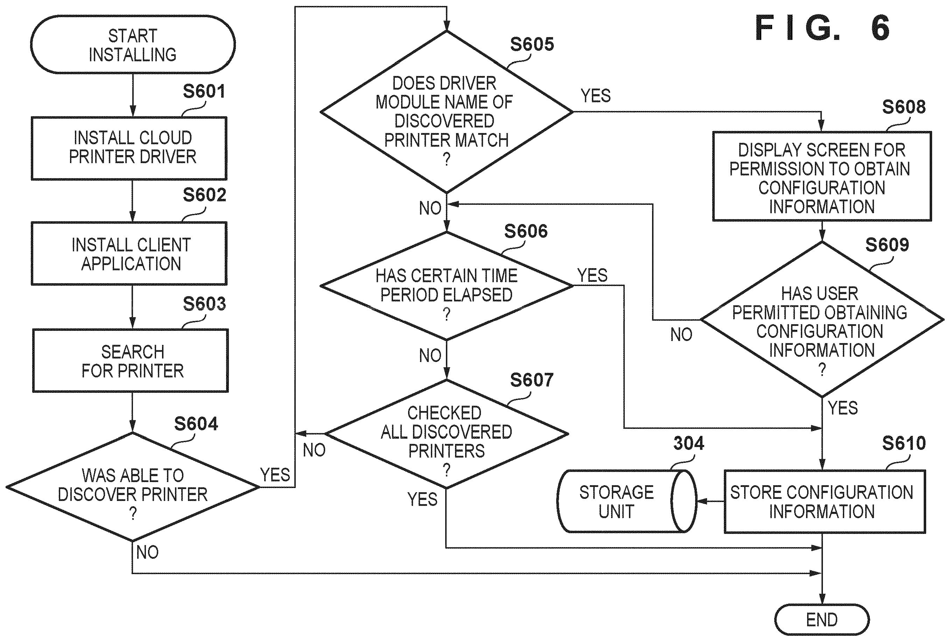

FIG. 6 is a flowchart showing an installation method for installing the client application and the cloud printer driver according to the present embodiment. The present processing is processing for applying configuration information that suits the cloud printer driver when a user has executed an installer on the client terminal 101 and installed the client application and the cloud printer driver. The processing of FIG. 6 is executed by the CPU 301. Applying the configuration information means storing the configuration information into a registry and setting the configuration information as configuration information of the printer driver.

In step S601, the cloud printer driver is installed. The cloud printer driver may have been downloaded via, for example, the communication unit 305, or may have been stored in the storage unit 304 as a file. The same goes for the client application.

In step S602, the installation of the client application is executed. Here, processing of the installer is ended, and the client application is executed.

In step S603, the client application, especially the printer search unit 407 thereof, executes a search for a printer(s) that exists in the same network. In the printer search, a standard method provided by an operating system of the client terminal may be used. An IP address corresponding to the printer that has been discovered through the printer search is obtained.

Step S604 determines whether a printer(s) has been able to be discovered in step S603. In a case where at least one printer has been able to be discovered, processing transitions to step S605; in a case where no printer has been able to be discovered, processing is ended because there is no printer from which configuration information can be obtained.

In step S605, one of the printers that have been discovered in step S603 is selected, and whether it satisfies a predetermined condition is determined. Specifically, whether a driver module name of the selected printer matches a driver module name of the installed cloud printer driver is determined. The driver module name of the selected printer may be, for example, a driver module name of an installed printer driver of the printer that has been obtained through the search. This driver module name can be obtained from configuration information that is held in the printer driver, or stored in the registry in association with the printer driver. In either case, the configuration information is associated (or placed in correspondence with) the printer driver. In a case where both of the driver module names match as a result of the determination in step S605, processing transitions to step S608; in a case where they do not match, processing transitions to step S606. Note that in a case where the printer driver of the printer that has been discovered through the search has not been installed on the client terminal 101, it may be considered that the driver module names do not match, and processing may branch out to step S606. Note that the image forming apparatus on which the printer driver has been installed may be referred to an image forming apparatus that has performed installation.

Step S606 determines whether a certain time period has elapsed since the printer search of step S603. In a case where the certain time period or longer has elapsed, it is considered that processing for obtaining configuration information from the printer driver of the client terminal 101 has timed out, and processing is ended. In a case where the certain time period has not elapsed, processing is to be continued and thus transitions to step S607.

Step S607 determines whether the checking of the driver module name in step S605 has been performed with respect to all of the printers that have been able to be discovered through the printer search of step S603. In a case where the checking has been performed with respect to all of the printers, it is determined that there is no printer from which configuration information to be applied to the cloud printer driver can be obtained for the client terminal, and processing is ended. In a case where there is a printer for which the determination of the driver module name has not been made, processing transitions to step S605 to continue the checking.

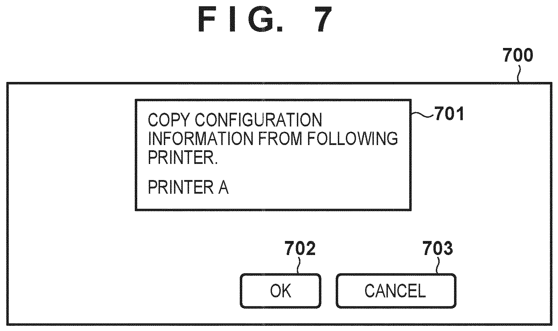

In step S608, the client application displays a dialog for querying (confirming with) the user about whether to apply configuration information corresponding to the printer driver that has the same driver module name as the cloud printer driver to the cloud printer driver. FIG. 7 shows an example of a screen of the dialog. A dialog screen 700 shows a text box 701 indicating a confirmation message for the user and the name of the printer installed on the client terminal 101 from which the configuration information is to be obtained.

In step S609, in a case where the user has permitted the application of the configuration information by, for example, clicking a permission button 702 shown in FIG. 7 on the dialog screen 700 displayed in step S608, processing transitions to step S610. In a case where the user has not permitted the application of the configuration information by clicking a non-permission button 703, processing transitions to step S606 so as to make an attempt to obtain configuration information from another printer of the client terminal 101.

In step S610, the configuration information of the printer driver that has the same driver module name as the cloud printer driver is obtained, stored into the storage unit 304 as a registry value of the printer driver, and set as configuration information of the cloud printer driver.

With the above-described configuration and processing, configuration information of an installed printer driver can be set as configuration information of a cloud printer driver that has been newly installed. At this time, as the identicalness of driver modules has been confirmed, when changing a configuration to a configuration that uses an image forming apparatus installed on the client terminal by way of the CPS, the effort required to set a configuration of the image forming apparatus can be alleviated. Furthermore, the configuration information that has been set is accurate, too.

### [Second Embodiment]

A second embodiment of the present invention will be described. The second embodiment will be described using an example in which items that can be used as configuration information of the cloud printer driver are extracted from printers that have already been installed on the client terminal, and applied as the configuration information of the cloud printer driver, in addition to the configuration of the first embodiment.

An overall configuration of a system, a hardware configuration, and a software configuration according to the second embodiment are similar to those of FIGs. 1, 2, 3, 4, and 5 according to the first embodiment.

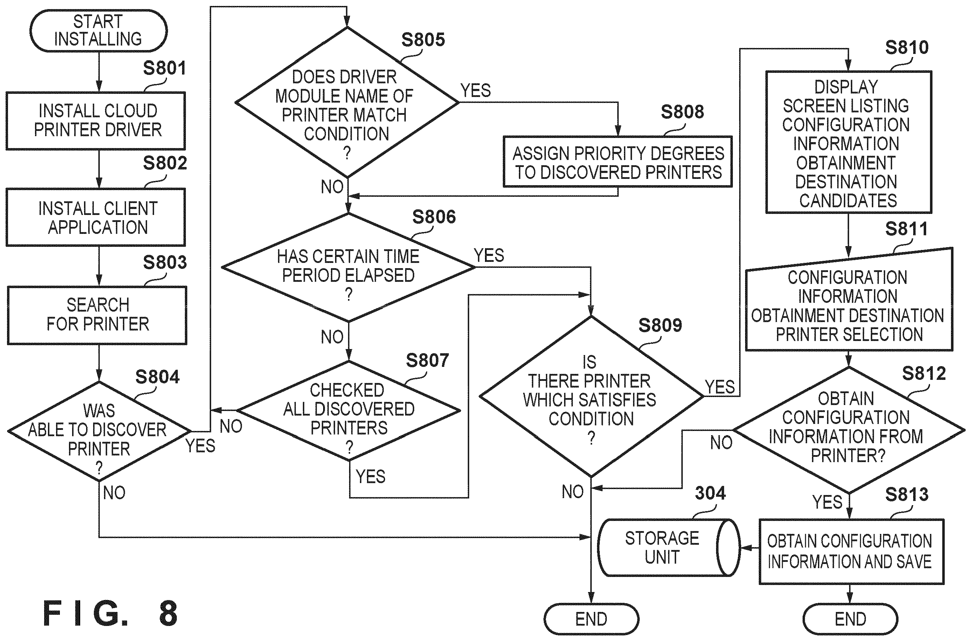

FIG. 8 is a flowchart of a case where the client application and the cloud printer driver are installed in the present embodiment. The present processing is processing in which a user executes an installer on the client terminal 101, installs the client application and the cloud printer driver, and applies configuration information that suits the cloud printer driver.

Steps S801 to S804 are similar to steps S601 to S604 according to the first embodiment.

In step S805, one of the printers that have been discovered in step S803 is selected, and whether it satisfies a predetermined condition is determined. Specifically, whether a driver module name of the printer matches a driver module name of the installed cloud printer driver is determined. In a case where they do not match, whether a maker of the driver module of the printer matches a maker of the driver module of the cloud printer driver is determined. In a case where one of the conditions is satisfied, processing transitions to step S808; in a case where neither the driver module names nor the makers match, processing transitions to step S806.

Step S806 determines whether a certain time period has elapsed since the printer search of step S803. In a case where the certain time period or longer has elapsed, it is considered that processing for obtaining configuration information from the printer driver of the client terminal 101 has timed out, and processing transitions to step S809. In a case where the certain time period has not elapsed, processing is to be continued and thus transitions to step S807.

Step S807 determines whether the checking of the driver module name in step S805 has been performed with respect to all of the printers that have been able to be discovered through the printer search of step S803. In a case where the checking has been performed with respect to all of the printers, processing transitions to step S809. In a case where there is a printer for which the determination of the driver module name has not been made, processing transitions to step S805 to continue the checking.

In step S808, priority degrees (or priorities) are assigned to the printers which have been discovered through the processing thus far and which satisfy the predetermined condition. In the assignment of the priority degrees, the priority degrees of the printers are determined based on the priority degrees shown in table 1. Then, these priority degrees are stored in association with the printers. Note that pieces of configuration information may be obtained here because the driver module names and the manufacturer names that are referred to in determining the priority degrees can be obtained from the pieces of configuration information. Also, designation as a default printer can be determined by referring to, for example, information in the registry included in the client terminal 101.

In the example of table 1, the highest priority degree is assigned to a printer that is the same as the cloud printer driver in both of the driver module name and the maker. The second highest priority degree is assigned to a printer that is the same as the cloud printer driver in the driver module name but is not the same thereas in the maker. The third highest priority degree is assigned to a printer that is not the same as the cloud printer driver in the driver module name, is the same thereas in the maker, and has been designated as a default printer. The fourth highest priority degree is assigned to a printer that is not the same as the cloud printer driver in the driver module name, is the same thereas in the maker, and has not been designated as a default printer. In this way, printers that satisfy at least one of the following are regarded as candidates: the printer driver has the same driver module as the cloud printer driver; and the maker of the printer driver is the same as the maker of the cloud printer driver. Then, the priority degrees are assigned to the printers that are regarded as candidates. Note that regarding the top two conditions in table 1, whether there has been a designation as a default may be referred to. In this case, if there is a printer that has been designated as a default, this printer is assigned a high priority degree compared to a printer that has not been designated as a default.

Priority degrees may be assigned to other printers as well. For example, the next highest priority degree may be assigned to a printer that is the same as the cloud printer driver in the driver module name and the maker and has not been designated as a default. Furthermore, a priority degree that is immediately below a priority degree of a printer that is the same as the cloud printer driver in the driver module name, is not the same thereas in the maker, and has been designated as a default, may be assigned to a printer that satisfies the same conditions regarding the name and the maker but has not been designated as a default. In this way, table 1 is one example, and the priority degrees may be assigned based on other criteria. Note that in the present example, a priority degree may not be assigned to a printer that does not satisfy the conditions for assigning the priority degrees shown in table 1.

**[Table 1]**

| | Same as cloud printer driver in module name | Same as cloud printer driver in maker | Designated as default printer |
|---|---|---|---|
| High priority degree | Yes | Yes | - |
| | Yes | No | - |
| | No | Yes | Yes |
| Low priority degree | No | Yes | No |

Step S809 determines whether at least one printer satisfies the condition in the determination about the driver module name in step S805. In a case where there is a printer that satisfies the condition, processing transitions to step S810; in a case where none of the printers satisfies the condition, processing is ended.
The determination of step S809 may be made by determining whether the priority degrees assigned to the printers have been stored.

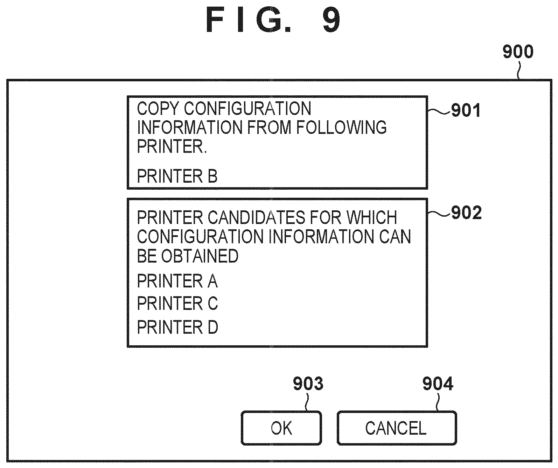

In step S810, a screen for determining a printer from which configuration information is to be obtained among the printers that have been discovered through the processing thus far, such as a candidate screen 900 shown in FIG. 9, for example, is displayed. In accordance with the assignment of the priority degrees determined in step S808, the name of the printer with the highest priority degree is displayed in a preferential obtainment destination 901. The names of other printers are displayed in a candidate list 902. The printers that are not assigned the priority degrees are not candidates, and may not be display targets.

In step S811, the user's selection of a printer for obtaining configuration information is accepted. In order to obtain configuration information from the printer displayed in the preferential obtainment destination 901, the user clicks a determination button 903. When the user wishes to obtain configuration information from a printer different from the printer displayed in the preferential obtainment destination 901, the user clicks any printer name from the candidate list 902, and then clicks the determination button 903. When the user is not to obtain configuration information from a printer, the user clicks a cancel button 904.

In step S812, processing transitions to step S813 in a case where the user has clicked the determination button 903 in step S811, and processing is ended in a case where the user has clicked the cancel button 904.

Step S813 is similar to step S610 according to the first embodiment. Note that in a case where a printer has not been selected on the UI of FIG. 9, the obtainment target is configuration information of a printer driver of the printer with the highest priority degree that is displayed in the preferential obtainment destination 901. Meanwhile, in a case where a printer has been selected on the UI of FIG. 9, configuration information of a printer driver of the selected printer is obtained.

With the above-described configuration and processing, configuration information of an installed printer driver can be set as configuration information of a cloud printer driver that has been newly installed. At this time, as the identicalness of driver modules has been confirmed, when changing a configuration to a configuration that uses an image forming apparatus installed on the client terminal by way of the CPS, the effort required to set a configuration of the image forming apparatus can be alleviated. Furthermore, the configuration information that has been set is accurate, too.

In addition, according to the present embodiment, candidates for a printer that has applicable configuration information are presented to the user, and the user can select a printer that has configuration information to be applied to the cloud printer driver from among the candidates. Therefore, the present embodiment gives the user room to select a configuration of an image forming apparatus that the user wants to use.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited solely to the disclosed embodiments but rather the scope of the invention is defined by the claims.

## Claims

1. An information processing apparatus (101) connectable to a server (103) that is configured to provide a cloud printing service, comprising:
communication means (305) for communicating with a connected external apparatus; and
control means (301),
wherein the control means (301) is configured to
specify an image forming apparatus (102) that satisfies a predetermined condition from among a plurality of image forming apparatuses that have already been installed on the information processing apparatus (101) when installing a cloud printer driver that generates a print job to be transmitted to the server (103) (407, S603 to S609, S803 to S812), and is configured to
set configuration information of a printer driver of the specified image forming apparatus as configuration information of the cloud printer driver (402, 405, S610,S813), wherein
in a case where there are a plurality of image forming apparatuses (102) that satisfy the predetermined condition, the control means (301) is configured to regard an image forming apparatus that has been assigned a highest priority among the plurality of image forming apparatuses or an image forming apparatus that has been selected by a user from among the plurality of image forming apparatuses, as the specified image forming apparatus, and is configured to set the configuration information of the printer driver of the specified image forming apparatus as the configuration information of the cloud printer driver.

2. The information processing apparatus (101) according to claim 1, wherein
the predetermined condition includes satisfaction of at least one of a condition in which the printer driver has the same driver module as the cloud printer driver and a condition in which a maker of the printer driver is the same as a maker of the cloud printer driver.

3. The information processing apparatus (101) according to claim 1 or 2, wherein
the plurality of image forming apparatuses (102) descend in the following order in terms of the priorities assigned by the control means (201):
an image forming apparatus with the printer driver which has the same driver module as the cloud printer driver, and whose maker is the same as a maker of the cloud printer driver;
an image forming apparatus with the printer driver which has the same driver module as the cloud printer driver, and whose maker is not the same as the maker of the cloud printer driver; and
an image forming apparatus with the printer driver which does not have the same driver module as the cloud printer driver, and whose maker is the same as the maker of the cloud printer driver.

4. The information processing apparatus (101) according to claim 3, wherein
in a case where there are a plurality of image forming apparatuses (102) that are ranked the same in terms of the order in which the priorities are assigned, the control means (301) is configured to set a higher priority for an image forming apparatus that has been set as a default printer by the information processing apparatus than for an image forming apparatus that has not been set as the default printer.

5. The information processing apparatus (101) according to any one of claims 1 to 4, further comprising
user interface means (406) configured to confirm with a user that the configuration information of the printer driver of the specified image forming apparatus (102) is to be set as the configuration information of the cloud printer driver,
wherein
the user interface means is further configured to display a list of the plurality of image forming apparatuses in association with the priorities, and
the control means (301) is configured to regard an image forming apparatus that has been assigned a highest priority among the plurality of image forming apparatuses or an image forming apparatus that has been selected by a user from among the plurality of image forming apparatuses included in the list, as the specified image forming apparatus, and is configured to set the configuration information of the printer driver of the specified image forming apparatus as the configuration information of the cloud printer driver.

6. The information processing apparatus (101) according to any one of claims 1 to 5, wherein
the image forming apparatuses (102) that have already been installed on the information processing apparatus are image forming apparatuses that obtain a print job from the cloud printing service (103) and print the print job.

7. A method of installing a cloud printer driver executed by an information processing apparatus (101) connectable to a server (103) configured to provide a cloud printing service, comprising:
specifying (S603 to S609, S803 to S812) an image forming apparatus (102) that satisfies a predetermined condition from among a plurality of image forming apparatuses that have already been installed on the information processing apparatus when installing a cloud printer driver that generates a print job to be transmitted to the server;
setting configuration information of a printer driver of the specified image forming apparatus as configuration information of the cloud printer driver (S610, S813); and wherein
in a case where there are a plurality of image forming apparatuses (102) that satisfy the predetermined condition, regarding an image forming apparatus that has been assigned a highest priority among the plurality of image forming apparatuses or an image forming apparatus that has been selected by a user from among the plurality of image forming apparatuses, as the specified image forming apparatus, and setting the configuration information of the printer driver of the specified image forming apparatus as the configuration information of the cloud printer driver.

8. The method according to claim 7, wherein the predetermined condition includes satisfaction of at least one of a condition in which the printer driver has the same driver module as the cloud printer driver and a condition in which a maker of the printer driver is the same as a maker of the cloud printer driver.

9. The method according to claim 7 or claim 8, wherein the plurality of image forming apparatuses (102) descend in the following order in terms of the priorities assigned:
an image forming apparatus with the printer driver which has the same driver module as the cloud printer driver, and whose maker is the same as a maker of the cloud printer driver;
an image forming apparatus with the printer driver which has the same driver module as the cloud printer driver, and whose maker is not the same as the maker of the cloud printer driver; and
an image forming apparatus with the printer driver which does not have the same driver module as the cloud printer driver, and whose maker is the same as the maker of the cloud printer driver.

10. The method according to claim 9, wherein in a case where there are a plurality of image forming apparatuses (102) that are ranked the same in terms of the order in which the priorities are assigned, setting a higher priority for an image forming apparatus that has been set as a default printer by the information processing apparatus than for an image forming apparatus that has not been set as the default printer.

11. The method according to any one of claims 7 to 10, further comprising
confirming, by a user through a user interface, that the configuration information of the printer driver of the specified image forming apparatus (102) is to be set as the configuration information of the cloud printer driver,
displaying, in the user interface, a list of the plurality of image forming apparatuses in association with the priorities, and
regarding an image forming apparatus that has been assigned a highest priority among the plurality of image forming apparatuses or an image forming apparatus that has been selected by a user from among the plurality of image forming apparatuses included in the list, as the specified image forming apparatus, and is configured to set the configuration information of the printer driver of the specified image forming apparatus as the configuration information of the cloud printer driver.

12. The method according to any one of claims 7 to 11, wherein the image forming apparatuses (102) that have already been installed on the information processing apparatus are image forming apparatuses that obtain a print job from the cloud printing service (103) and print the print job.

13. A computer program which, when executed by a computer or one or more processing units, causes the computer or one or more processing units to carry out the method of any of claims 7 to 12.

## Patentansprüche

1. Informationsverarbeitungsvorrichtung (101), die mit einem Server (103) verbindbar ist, der konfiguriert ist, einen Cloud-Druckdienst bereitzustellen, umfassend:
eine Kommunikationseinrichtung (305) zum Kommunizieren mit einer verbundenen externen Vorrichtung; und
eine Steuereinrichtung (301),
wobei die Steuereinrichtung (301) konfiguriert ist,
eine Bilderzeugungsvorrichtung (102), die eine vorbestimmte Bedingung erfüllt, aus mehreren Bilderzeugungsvorrichtungen zu spezifizieren, die bereits auf der Informationsverarbeitungsvorrichtung (101) installiert wurden, wenn ein Cloud-Druckertreiber installiert wird, der einen an den Server (103) zu übertragenden Druckauftrag erzeugt (407, S603 bis S609, S803 bis S812), und konfiguriert ist,
Konfigurationsinformationen eines Druckertreibers der spezifizierten Bilderzeugungsvorrichtung als Konfigurationsinformationen des Cloud-Druckertreibers einzustellen (402, 405, S610, 5813), wobei
in einem Fall, in dem es mehrere Bilderzeugungsvorrichtungen (102) gibt, die die vorbestimmte Bedingung erfüllen, die Steuereinrichtung (301) konfiguriert ist, eine Bilderzeugungsvorrichtung, der von den mehreren Bilderzeugungsvorrichtungen eine höchste Priorität zugewiesen wurde, oder eine Bilderzeugungsvorrichtung, die durch einen Benutzer aus den mehreren Bilderzeugungsvorrichtungen ausgewählt wurde, als die spezifizierte Bilderzeugungsvorrichtung zu betrachten, und konfiguriert ist, die Konfigurationsinformationen des Druckertreibers der spezifizierten Bilderzeugungsvorrichtung als die Konfigurationsinformationen des Cloud-Druckertreibers einzustellen.

2. Informationsverarbeitungsvorrichtung (101) nach Anspruch 1,
wobei die vorbestimmte Bedingung umfasst, dass mindestens eine von einer Bedingung, dass der Druckertreiber das gleiche Treibermodul wie der Cloud-Druckertreiber aufweist, und einer Bedingung, dass ein Hersteller des Druckertreibers der gleiche wie ein Hersteller des Cloud-Druckertreibers ist, erfüllt ist.

3. Informationsverarbeitungsvorrichtung (101) nach Anspruch 1 oder 2,
wobei die mehreren Bilderzeugungsvorrichtungen (102) hinsichtlich der durch die Steuereinrichtung (201) zugewiesenen Prioritäten in folgender absteigender Reihenfolge geordnet sind:
eine Bilderzeugungsvorrichtung mit dem Druckertreiber, der das gleiche Treibermodul wie der Cloud-Druckertreiber aufweist und dessen Hersteller der gleiche wie ein Hersteller des Cloud-Druckertreibers ist;
eine Bilderzeugungsvorrichtung mit dem Druckertreiber, der das gleiche Treibermodul wie der Cloud-Druckertreiber aufweist und dessen Hersteller nicht der gleiche wie der Hersteller des Cloud-Druckertreibers ist; und
eine Bilderzeugungsvorrichtung mit dem Druckertreiber, der nicht das gleiche Treibermodul wie der Cloud-Druckertreiber aufweist und dessen Hersteller der gleiche wie der Hersteller des Cloud-Druckertreibers ist.

4. Informationsverarbeitungsvorrichtung (101) nach Anspruch 3, wobei
in einem Fall, in dem es mehrere Bilderzeugungsvorrichtungen (102) gibt, die hinsichtlich der Reihenfolge, in der die Prioritäten zugewiesen sind, auf dem gleichen Platz angeordnet sind, die Steuereinrichtung (301) konfiguriert ist, für eine Bilderzeugungsvorrichtung, die durch die Informationsverarbeitungsvorrichtung als ein Standarddrucker eingestellt wurde, eine höhere Priorität einzustellen, als für eine Bilderzeugungsvorrichtung, die nicht als der Standarddrucker eingestellt wurde.

5. Informationsverarbeitungsvorrichtung (101) nach einem der Ansprüche 1 bis 4, ferner umfassend
eine Benutzerschnittstelleneinrichtung (406), die konfiguriert ist, von einem Benutzer bestätigen zu lassen, dass die Konfigurationsinformationen des Druckertreibers der spezifizierten Bilderzeugungsvorrichtung (102) als die Konfigurationsinformationen des Cloud-Druckertreibers einzustellen sind,
wobei
die Benutzerschnittstelleneinrichtung ferner konfiguriert ist, eine Liste der mehreren Bilderzeugungsvorrichtungen in Verbindung mit den Prioritäten anzuzeigen, und
die Steuereinrichtung (301) konfiguriert ist, eine Bilderzeugungsvorrichtung von den mehreren Bilderzeugungsvorrichtungen, der eine höchste Priorität zugewiesen wurde, oder eine Bilderzeugungsvorrichtung, die durch einen Benutzer aus den mehreren Bilderzeugungsvorrichtungen ausgewählt wurde, die in der Liste enthalten sind, als die spezifizierte Bilderzeugungsvorrichtung zu betrachten, und konfiguriert ist, die Konfigurationsinformationen des Druckertreibers der spezifizierten Bilderzeugungsvorrichtung als die Konfigurationsinformationen des Cloud-Druckertreibers einzustellen.

6. Informationsverarbeitungsvorrichtung (101) nach einem der Ansprüche 1 bis 5, wobei
die Bilderzeugungsvorrichtungen (102), die bereits auf der Informationsverarbeitungsvorrichtung installiert wurden, Bilderzeugungsvorrichtungen sind, die einen Druckauftrag von dem Cloud-Druckdienst (103) erhalten und den Druckauftrag drucken.

7. Verfahren zum Installieren eines Cloud-Druckertreibers, das durch eine Informationsverarbeitungsvorrichtung (101) ausgeführt wird, die mit einem Server (103) verbindbar ist, der konfiguriert ist, einen Cloud-Druckdienst bereitzustellen, umfassend:
Spezifizieren (S603 bis S609, S803 bis S812) einer Bilderzeugungsvorrichtung (102), die eine vorbestimmte Bedingung erfüllt, aus mehreren Bilderzeugungsvorrichtungen, die bereits auf der Informationsverarbeitungsvorrichtung installiert wurden, wenn ein Cloud-Druckertreiber installiert wird, der einen an den Server zu übertragenden Druckauftrag erzeugt;
Einstellen von Konfigurationsinformationen eines Druckertreibers der spezifizierten Bilderzeugungsvorrichtung als Konfigurationsinformationen des Cloud-Druckertreibers (S610, S813); und wobei
in einem Fall, in dem es mehrere Bilderzeugungsvorrichtungen (102) gibt, die die vorbestimmte Bedingung erfüllen, eine Bilderzeugungsvorrichtung, der von den mehreren Bilderzeugungsvorrichtungen eine höchste Priorität zugewiesen wurde, oder eine Bilderzeugungsvorrichtung, die durch einen Benutzer aus den mehreren Bilderzeugungsvorrichtungen ausgewählt wurde, als die spezifizierte Bilderzeugungsvorrichtung betrachtet wird, und die Konfigurationsinformationen des Druckertreibers der spezifizierten Bilderzeugungsvorrichtung als die Konfigurationsinformationen des Cloud-Druckertreibers eingestellt werden.

8. Verfahren nach Anspruch 7, wobei die vorbestimmte Bedingung umfasst, dass mindestens eine von einer Bedingung, dass der Druckertreiber das gleiche Treibermodul wie der Cloud-Druckertreiber aufweist, und einer Bedingung, dass ein Hersteller des Druckertreibers der gleiche wie ein Hersteller des Cloud-Druckertreibers ist, erfüllt ist.

9. Verfahren nach Anspruch 7 oder Anspruch 8, wobei die mehreren Bilderzeugungsvorrichtungen (102) hinsichtlich der zugewiesenen Prioritäten in folgender absteigender Reihenfolge geordnet sind:
eine Bilderzeugungsvorrichtung mit dem Druckertreiber, der das gleiche Treibermodul wie der Cloud-Druckertreiber aufweist und dessen Hersteller der gleiche wie ein Hersteller des Cloud-Druckertreibers ist;
eine Bilderzeugungsvorrichtung mit dem Druckertreiber, der das gleiche Treibermodul wie der Cloud-Druckertreiber aufweist und dessen Hersteller nicht der gleiche wie der Hersteller des Cloud-Druckertreibers ist; und
eine Bilderzeugungsvorrichtung mit dem Druckertreiber, der nicht das gleiche Treibermodul wie der Cloud-Druckertreiber aufweist und dessen Hersteller der gleiche wie der Hersteller des Cloud-Druckertreibers ist.

10. Verfahren nach Anspruch 9, wobei in einem Fall, in dem es mehrere Bilderzeugungsvorrichtungen (102) gibt, die hinsichtlich der Reihenfolge, in der die Prioritäten zugewiesen sind, auf dem gleichen Platz angeordnet sind, für eine Bilderzeugungsvorrichtung die durch die Informationsverarbeitungsvorrichtung als ein Standarddrucker eingestellt wurde, eine höhere Priorität eingestellt wird, als für eine Bilderzeugungsvorrichtung, die nicht als der Standarddrucker eingestellt wurde.

11. Verfahren nach einem der Ansprüche 7 bis 10, ferner umfassend
Bestätigen, durch einen Benutzer über eine Benutzerschnittstelle, dass die Konfigurationsinformationen des Druckertreibers der spezifizierten Bilderzeugungsvorrichtung (102) als die Konfigurationsinformationen des Cloud-Druckertreibers einzustellen sind,
Anzeigen, in der Benutzerschnittstelle, einer Liste der mehreren Bilderzeugungsvorrichtungen in Verbindung mit den Prioritäten, und
Betrachten einer Bilderzeugungsvorrichtung von den mehreren Bilderzeugungsvorrichtungen, der eine höchste Priorität zugewiesen wurde, oder einer Bilderzeugungsvorrichtung, die durch einen Benutzer aus den mehreren Bilderzeugungsvorrichtungen ausgewählt wurde, die in der Liste enthalten sind, als die spezifizierte Bilderzeugungsvorrichtung, und Einstellen der Konfigurationsinformationen des Druckertreibers der spezifizierten Bilderzeugungsvorrichtung als die Konfigurationsinformationen des Cloud-Druckertreibers.

12. Verfahren nach einem der Ansprüche 7 bis 11, wobei die Bilderzeugungsvorrichtungen (102), die bereits auf der Informationsverarbeitungsvorrichtung installiert wurden, Bilderzeugungsvorrichtungen sind, die einen Druckauftrag von dem Cloud-Druckdienst (103) erhalten und den Druckauftrag drucken.

13. Computerprogramm, das, wenn es durch einen Computer oder eine oder mehrere Verarbeitungseinheiten ausgeführt wird, den Computer oder die eine oder mehrere Verarbeitungseinheiten veranlasst, das Verfahren nach einem der Ansprüche 7 bis 12 auszuführen.

## Revendications

1. Appareil de traitement d'informations (101) pouvant être connecté à un serveur (103) qui est configuré pour fournir un service d'impression en nuage, comportant :
des moyens de communication (305) pour communiquer avec un appareil externe connecté ; et
des moyens de commande (301),
dans lequel les moyens de commande (301) sont configurés pour
spécifier un appareil de formation d'image (102) qui remplit une condition prédéterminée parmi une pluralité d'appareils de formation d'image qui ont déjà été installés sur l'appareil de traitement d'informations (101) lors de l'installation d'un pilote d'imprimante en nuage qui génère une tâche d'impression à transmettre au serveur (103) (407, S603 à S609, S803 à S812), et sont configurés pour
définir des informations de configuration d'un pilote d'imprimante de l'appareil de formation d'image spécifié comme des informations de configuration du pilote d'imprimante en nuage (402, 405, S610, S813), dans lequel, dans un cas où il existe une pluralité d'appareils de formation d'image (102) qui remplissent la condition prédéterminée, les moyens de commande (301) sont configurés pour considérer un appareil de formation d'image, auquel il a été attribué la priorité la plus élevée parmi la pluralité d'appareils de formation d'image ou un appareil de formation d'image qui a été sélectionné par un utilisateur parmi la pluralité d'appareils de formation d'image, comme l'appareil de formation d'image spécifié, et sont configurés pour définir les informations de configuration du pilote d'imprimante de l'appareil de formation d'image spécifié comme les informations de configuration du pilote d'imprimante en nuage.

2. Appareil de traitement d'informations (101) selon la revendication 1, dans lequel
la condition prédéterminée inclut le fait de remplir au moins l'une parmi une condition dans laquelle le pilote d'imprimante présente le même module de pilote que le pilote d'imprimante en nuage et une condition dans laquelle un fabricant du pilote d'imprimante est le même qu'un fabricant du pilote d'imprimante en nuage.

3. Appareil de traitement d'informations (101) selon la revendication 1 ou 2, dans lequel
la pluralité d'appareils de formation d'image (102) décroissent dans l'ordre suivant en termes de priorités attribuées par les moyens de commande (201) :
un appareil de formation d'image avec le pilote d'imprimante qui présente le même module de pilote que le pilote d'imprimante en nuage, et dont le fabricant est le même qu'un fabricant du pilote d'imprimante en nuage ;
un appareil de formation d'image avec le pilote d'imprimante qui présente le même module de pilote que le pilote d'imprimante en nuage, et dont le fabricant n'est pas le même que le fabricant du pilote d'imprimante en nuage ; et
un appareil de formation d'image avec le pilote d'imprimante qui ne présente pas le même module de pilote que le pilote d'imprimante en nuage, et dont le fabricant est le même que le fabricant du pilote d'imprimante en nuage.

4. Appareil de traitement d'informations (101) selon la revendication 3, dans lequel
dans un cas où il existe une pluralité d'appareils de formation d'image (102) qui présentent le même classement en termes d'ordre dans lequel les priorités sont attribuées, les moyens de commande (301) sont configurés pour définir une priorité plus élevée pour un appareil de formation d'image qui a été défini comme imprimante par défaut par l'appareil de traitement d'informations que pour un appareil de formation d'image qui n'a pas été défini comme imprimante par défaut.

5. Appareil de traitement d'informations (101) selon l'une quelconque des revendications 1 à 4, comportant en outre :
un moyen d'interface utilisateur (406) configuré pour confirmer avec un utilisateur que les informations de configuration du pilote d'imprimante de l'appareil de formation d'image spécifié (102) doivent être définies comme les informations de configuration du pilote d'imprimante en nuage,
dans lequel
les moyens d'interface utilisateur sont en outre configurés pour afficher une liste de la pluralité d'appareils de formation d'image en association avec les priorités, et
les moyens de commande (301) sont configurés pour considérer un appareil de formation d'image auquel il a été attribué une priorité la plus élevée parmi la pluralité d'appareils de formation d'image ou un appareil de formation d'image qui a été sélectionné par un utilisateur parmi la pluralité d'appareils de formation d'image inclus dans la liste, comme l'appareil de formation d'image spécifié, et sont configurés pour définir les informations de configuration du pilote d'imprimante de l'appareil de formation d'image spécifié comme les informations de configuration du pilote d'imprimante en nuage.

6. Appareil de traitement d'informations (101) selon l'une quelconque des revendications 1 à 5, dans lequel les appareils de formation d'image (102) qui ont déjà été installés sur l'appareil de traitement d'informations sont des appareils de formation d'image qui obtiennent une tâche d'impression du service d'impression en nuage (103) et impriment la tâche d'impression.

7. Procédé d'installation d'un pilote d'imprimante en nuage exécuté par un appareil de traitement d'informations (101) pouvant être connecté à un serveur (103) configuré pour fournir un service d'impression en nuage, comportant : la spécification (S603 à S609, S803 à S812) d'un appareil de formation d'image (102) qui remplit une condition prédéterminée parmi une pluralité d'appareils de formation d'image qui ont déjà été installés sur l'appareil de traitement d'informations lors de l'installation d'un pilote d'imprimante en nuage qui génère une tâche d'impression à transmettre au serveur ; la définition d'informations de configuration d'un pilote d'imprimante de l'appareil de formation d'image spécifié comme informations de configuration du pilote d'imprimante en nuage (S610, S813) ; et dans lequel, dans un cas où il existe une pluralité d'appareils de formation d'image (102) qui remplissent la condition prédéterminée, le fait de considérer un appareil de formation d'image auquel il a été attribué une priorité la plus élevée parmi la pluralité d'appareils de formation d'image, ou un appareil de formation d'image qui a été sélectionné par un utilisateur parmi la pluralité d'appareils de formation d'image, comme l'appareil de formation d'image spécifié, et la définition des informations de configuration du pilote d'imprimante de l'appareil de formation d'image spécifié comme les informations de configuration du pilote d'imprimante en nuage.

8. Procédé selon la revendication 7, dans lequel la condition prédéterminée inclut le fait de remplir au moins l'une parmi une condition dans laquelle le pilote d'imprimante présente le même module de pilote que le pilote d'imprimante en nuage et une condition dans laquelle un fabricant du pilote d'imprimante est le même qu'un fabricant du pilote d'imprimante en nuage.

9. Procédé selon la revendication 7 ou 8, dans lequel la pluralité d'appareils de formation d'image (102) décroissent dans l'ordre suivant en termes de priorités attribuées :
un appareil de formation d'image avec le pilote d'imprimante qui présente le même module de pilote que le pilote d'imprimante en nuage, et dont le fabricant est le même qu'un fabricant du pilote d'imprimante en nuage ;
un appareil de formation d'image avec le pilote d'imprimante qui présente le même module de pilote que le pilote d'imprimante en nuage, et dont le fabricant n'est pas le même que le fabricant du pilote d'imprimante en nuage ; et
un appareil de formation d'image avec le pilote d'imprimante qui ne présente pas le même module de pilote que le pilote d'imprimante en nuage, et dont le fabricant est le même que le fabricant du pilote d'imprimante en nuage.

10. Procédé selon la revendication 9, dans lequel, dans un cas où il existe une pluralité d'appareils de formation d'image (102) qui présentent le même classement en termes d'ordre dans lequel les priorités sont attribuées, la définition d'une priorité plus élevée pour un appareil de formation d'image qui a été défini comme imprimante par défaut par l'appareil de traitement d'informations que pour un appareil de formation d'image qui n'a pas été défini comme imprimante par défaut.

11. Procédé selon l'une quelconque des revendications 7 à 10, comportant en outre :
la confirmation, par un utilisateur via une interface utilisateur, que les informations de configuration du pilote d'imprimante de l'appareil de formation d'image (102) spécifié doivent être définies comme les informations de configuration du pilote d'imprimante en nuage,
l'affichage, dans l'interface utilisateur, d'une liste de la pluralité d'appareils de formation d'image en association avec les priorités, et
le fait de considérer un appareil de formation d'image auquel il a été attribué une priorité la plus élevée parmi la pluralité d'appareils de formation d'image ou un appareil de formation d'image qui a été sélectionné par un utilisateur parmi la pluralité d'appareils de formation d'image inclus dans la liste, comme l'appareil de formation d'image spécifié, et la définition des informations de configuration du pilote d'imprimante de l'appareil de formation d'image spécifié comme les informations de configuration du pilote d'imprimante en nuage.

12. Procédé selon l'une quelconque des revendications 7 à 11, dans lequel les appareils de formation d'image (102) qui ont déjà été installés sur l'appareil de traitement d'informations sont des appareils de formation d'image qui obtiennent une tâche d'impression du service d'impression en nuage (103) et impriment la tâche d'impression.

13. Programme informatique qui, lorsqu'il est exécuté par un ordinateur ou une ou plusieurs unités de traitement, amène l'ordinateur ou la ou les unités de traitement à réaliser le procédé selon l'une quelconque des revendications 7 à 12.
